# EUROPEAN PATENT SPECIFICATION

(11) **EP 2 875 766 B1**
(45) Date of publication and mention of the grant of the patent: **12.10.2016**
(21) Application number: 14192964.6
(22) Date of filing: 13.11.2014
(51) Int. Cl.: A47L 9/06, A47L 9/28

(54) **Vacuum cleaner**
Staubsauger
Aspirateur

(30) Priority: 13.11.2013 IT UD20130149
(43) Date of publication of application: 27.05.2015
(73) Proprietor: DE' LONGHI APPLIANCES SRL CON UNICO SOCIO, 31100 Treviso (IT)
(72) Inventor: De' Longhi, Giuseppe, 31100 Treviso (IT); Tomè, Alessandro, 33170 Pordenone (IT); Mazzolo, Emanuele, 31025 Santa Lucia di Piave (TV) (IT)
(74) Representative: Petraz, Davide Luigi

(56) References cited:
- EP-A1- 0 423 670
- EP-A1- 0 546 620
- DE-B3-102007 059 930

## Description

### FIELD OF THE INVENTION

The present invention concerns a vacuum cleaner usable for example in the home, to suck up dust and particles of dirt of various kinds from different types of surfaces.

In particular, the present invention concerns a vacuum cleaner with optimized electric power, energy efficiency and cleaning efficiency that can be modulated automatically depending on the specific type of surface.

### BACKGROUND OF THE INVENTION

It is known that vacuum cleaners are provided with a suction unit equipped with a motor connected to a ventilator configured to generate a depression in a suction chamber into which dust, collected from a surface to be cleaned, is conveyed and collected due to the effect of said depression.

It is also known to use, in contact with the surface to be cleaned, possibly with the interposition of an extension tube, one or more terminal suction accessories fluidically connected to the suction unit, such as brushes or nozzles, of different sizes and conformations to adapt the functioning and efficiency of the vacuum cleaner to the different cleaning conditions that occur on each occasion.

Such accessories are normally studied for specific purposes and therefore are generally configured to be removable and replaceable according to their possible use.

Indeed it is well known that, to obtain an efficient suction, different suction parameters may be adopted for different surfaces, in terms of electric power supplied by the motor and the configuration of the terminal suction accessory.

We commonly distinguish two types of surface to be cleaned, that is, on the one hand hard floors, normally having a smooth and hard surface, for example floors covered with ceramic or glass tiles, or stone, parquet, laminate or resins, and on the other hand carpets or other flexible or yielding surfaces, normally defined by soft surfaces made of fabric, also including fitted carpets.

With regard to the above, nozzles, inserts or brushes are known, provided interchangeable for a dedicated and preferential use on a specific type of surface to be cleaned, or multi-purpose nozzles or inserts or brushes, generally having mobile bristles, whose position with respect to the body of the brush can be selectively modified depending on the surface to be cleaned.

In the field of cleaning surfaces, a "general-purpose vacuum cleaner" is defined as a vacuum cleaner with a fixed or at least removable nozzle, designed for cleaning carpets and hard floors, or having at least a removable nozzle designed specifically for cleaning carpets and at least a removable nozzle designed specifically for cleaning hard floors.

It is also known - and regulated by specific international regulations - that vacuum cleaners must be classified according to three criteria for evaluating performance: energy efficiency, cleaning efficiency and the (re)emission of dust.

The first criterion refers to the annual energy consumption of the vacuum cleaner and is a function both of the electric power supplied by the motor and also the capacity of sucking up the dust; the second criterion refers to the suction efficiency, in terms of ratio between quantity of dust picked up from the surface to be cleaned and the quantity of dust initially present on said surface; the third criterion refers to the ratio between the dust exiting from the vacuum cleaner and the quantity of dust picked up.

Based on the measurement of specific parameters, using suitable standardized testing procedures carried out at maximum electric power supplied by the motor, each vacuum cleaner comes into an efficiency class for each of the above three criteria.

Moreover, each vacuum cleaner has to carry on a specific label ("energy label") an explicit indication of the three classes to which it belongs.

For a general-purpose vacuum cleaner, each evaluation of the performance, and therefore each denotation of belonging to an efficiency class, is the result of an average between its behavior on hard floors and its behavior on carpets.

It is therefore very important, at the maximum electric power supplied by the motor, to have the best performance of the vacuum cleaner for cleaning both hard floors and carpets.

One disadvantage of some known vacuum cleaners is that they do not have a good energy efficiency, that is, low consumption, and good suction capacity: for example, motors may be provided that are able to supply a high electric power, even more than 2,000 W, which, even if they have a good suction capacity, can consume too much energy and are therefore not efficient from an energy point of view.

Another disadvantage of known general-purpose vacuum cleaners is that they are not optimized to have high suction efficiency for both hard floors and for carpets, and are therefore normally penalized on the latter.

One purpose of the present invention is to obtain a vacuum cleaner with both high energy efficiency and high capacity and efficiency in sucking up the dust and which, at the same time, can be classified in a high-efficiency class for one or more of said criteria for evaluating performance.

Another purpose of the present invention is to obtain a vacuum cleaner that belongs to one or more high-efficiency classes both with reference to hard floors and also with reference to carpets.

Another purpose of the present invention is to perfect a method for managing the electric power supplied by the motor according to the specific floor to be cleaned, in order to obtain the best performance of the vacuum cleaner.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a vacuum cleaner according to the present invention, such as for example but not restrictively, a general-purpose vacuum cleaner, comprises at least an electric motor to drive the suction, an electronic unit to control the electric power supplied by the electric motor, and one or more terminal suction accessories, such as nozzles or brushes, of different types and/or each having different functioning conditions.

According to a characteristic feature of the present invention, the vacuum cleaner comprises a device to command the electronic control unit which is provided with at least one power selector provided on a respective terminal suction accessory and at least a command member connected to the electronic control unit and able to be selectively activated by the at least one power selector in order to automatically set the electronic control unit to at least a maximum value of electric power supplied by the electric motor, depending on the type and/or functioning condition of the one or more terminal suction accessories.

In this way we obtain the advantage of being able to obtain automatically, only by the selective activation of the power selector present on the terminal suction accessories, a maximum value of power able to be supplied by the electric motor, which allows to manage the performance of the vacuum cleaner at different maximum electric powers depending on the different types and/or functioning conditions of the terminal suction accessories and therefore depending on the different surfaces to be cleaned.

Consequently, for example during the calibration, verification or classification of the vacuum cleaner, in which steps the performance of the vacuum cleaner is measured at maximum electric power, it is advantageously possible to set automatically, depending on the specific surface to be cleaned, the maximum electric power that the motor can supply. In this way, the vacuum cleaner is able to be classified in the highest energy efficiency classes, and can sustain the classification tests in trial conditions specifically studied and automatically set thanks to the present invention.

### BRIEF DESCRIPTION OF THE DRAWINGS

These and other characteristics of the present invention will become apparent from the following description of one form of embodiment, given as a non-restrictive example with reference to the attached drawings wherein:
- fig. 1 is a schematic representation of a vacuum cleaner in accordance with forms of embodiment described here;
- figs. 2a and 2b are three-dimensional schematic views of a vacuum cleaner according to forms of embodiment of the present invention, in two functioning conditions;
- figs. 3a and 3b are lateral views of variants respectively of fig. 2a and fig. 2b;
- figs. 4a and 4b are three-dimensional schematic views of other forms of embodiment of the vacuum cleaner according to the present invention.

In the following description, the same reference numbers indicate identical parts of the vacuum cleaner according to the present invention, also in different forms of embodiment. It is understood that elements and characteristics of one form of embodiment can be conveniently incorporated into other forms of embodiment without further clarifications.

### DETAILED DESCRIPTION OF SOME FORMS OF EMBODIMENT

We shall now refer in detail to the various forms of embodiment of the present invention, of which one or more examples are shown in the attached drawing. Each example is supplied by way of illustration of the invention and shall not be understood as a limitation thereof. For example, the characteristics shown or described insomuch as they are part of one form of embodiment can be adopted on, or in association with, other forms of embodiment to produce another form of embodiment. It is understood that the present invention shall include all such modifications and variants.

The attached drawings are supplied in schematic form and used to describe forms of embodiment of a vacuum cleaner 10 according to the present description.

In particular, forms of embodiment described here refer to a so-called "general-purpose" vacuum cleaner 10, that is, configured to suck up dust or other similar particles, both from surfaces which are essentially smooth and hard, not yielding, known in the field by the general name of "hard floors", and also from soft, yielding surfaces, generally made of fabric, known in the field by the general name of "carpets".

In the present description, with reference to the attached drawings, the two types of surface to be cleaned on which the vacuum cleaner 10 can be used, that is, hard floors and carpets, will be indicated with the respective alphanumerical references 11 a and 11b.

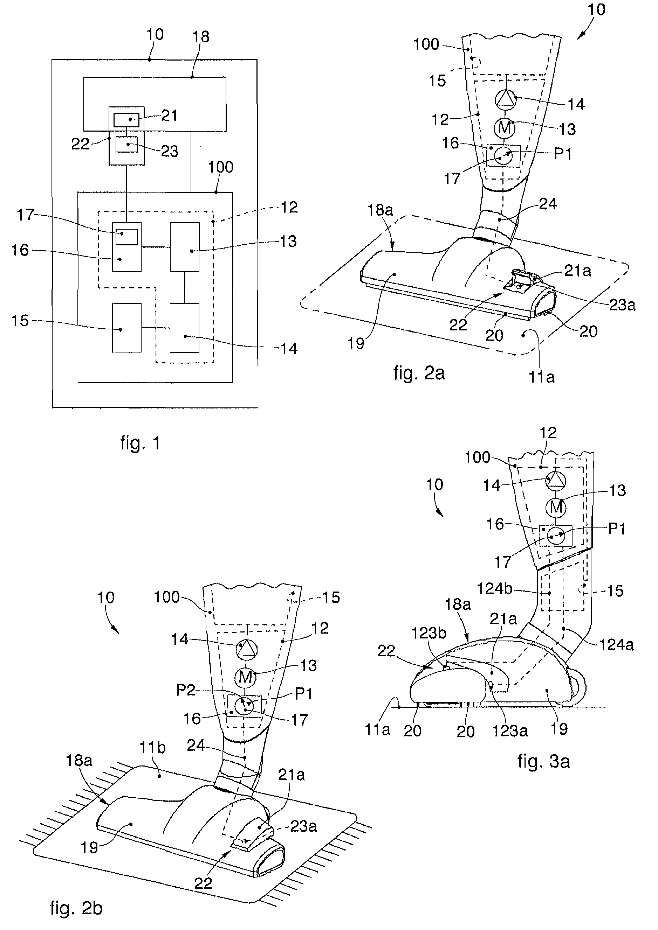

Fig. 1 is used to describe forms of embodiment of a vacuum cleaner 10 according to the present description, comprising an electric motor 13 to drive the suction, an electronic control unit 16 to control the electric power supplied by said electric motor 13 and one or more terminal suction accessories 18 of different types and/or each having different functioning conditions.

According to the present description, the vacuum cleaner 10 comprises a command device 22 of the electronic control unit 16, which is provided with at least one power selector 21 and at least one command member 23 connected to the electronic control unit 16 and which can be selectively activated by said at least one power selector 21 to automatically set the electronic control unit 16 to at least a maximum value P₁, P₂ of electric power supplied by said electric motor 13, depending on the type and/or functioning condition of the one or more terminal suction accessories 18.

In some forms of embodiment, the vacuum cleaner 10 can include, conventionally, a suction unit 12 provided with a ventilator 14 drivable by the electric motor 13. The ventilator 14 can be configured to determine, during use and following the driving of the electric motor 13, a depression inside a collection chamber 15, in which the dust sucked up is collected due to the effect of said depression.

Suction unit 12 and collection chamber 15 can both be contained inside the containing body 100 of the vacuum cleaner 10.

In possible implementations, the electronic control unit 16 can include an electronic regulator 17, for example defined by a central electronic unit acting on functioning parameters of the electric motor 13, such as for example supply current and/or voltage.

Figs. 2a and 2b are used to describe forms of embodiment in which, in contact with the hard floor 11 a (fig. 2a) and with the carpet 11b (fig. 2b), respectively, the vacuum cleaner 10 has a multifunction brush 18a.

In some forms of embodiment, the multifunction brush 18a can therefore define said terminal suction accessory 18, or insert, generically indicated above, and is able to be fluidically connected to the suction unit 12 to convey toward the collection chamber 15 the dust present on the hard floor 11 a and/or on the carpet 11b.

The multifunction brush 18a can be provided with a containing body 19, a plurality of mobile bristles 20, and means for moving the mobile bristles 20, not shown in the attached drawings, and driven by brush driving means, shown by way of example in figs. 2a and 2b by a pedal lever 21a, or equivalent brush driving means. The pedal lever 21a can therefore be, in forms of embodiment described here, the power selector 21.

The illustration of the pedal lever 21 a alone is given merely by way of example and is intended to give clarity and simplicity to the present description and attached drawings. The following description of the pedal lever 21a must therefore be considered as also referring to any other solution of brush driving means to move the mobile bristles 20.

The selective positioning of the pedal lever 21 a by the user can depend on the type of surface to be cleaned, and can cause, in a known manner, or in any case irrelevant for the purposes of the present description, the movement of the mobile bristles 20.

For example, fig. 2a is used to describe possible implementations in which the pedal lever 21 a can be positioned in a first position to make the multifunction brush 18a assume a first functioning condition in which the mobile bristles 20 protrude from below the containing body 19.

Fig. 2b can be used to show possible solutions in which the pedal lever 21 a can also assume a second position to determine a second functioning condition of the multifunction brush 18a, in which the mobile bristles 20 are completely retracted inside the containing body 19.

Various types of brush driving and bristle movement means, for example mechanical, electronic, electro-mechanical or magnetic, can be used in order to set, by means of its selective activation, the functioning conditions of the multifunction brush 18a.

The first functioning condition assumed by the multifunction brush 18a is specifically studied to suck up the dust from the hard floor 11a, while the second functioning condition of the multifunction brush 18a is specifically studied to suck up dust from the carpet 11b.

Figs. 2a and 2b are used to describe forms of embodiment in which the command device 22 with which the vacuum cleaner 10 is equipped includes the pedal lever 21 a with the function of power selector 21 and a switch 23 a with the function of command member 23, electrically or electronically connected to the electronic control unit 16.

As we said, the pedal lever 21 a can function as power selector 21 and interact with the switch 23a to selectively activate or de-activate it. The switch 23a can function as a command member 23 to transmit a desired signal to the electronic control unit 16, depending on the functioning condition of the multifunction brush 18a.

The pedal lever 21 a can be configured, when it is located in its first position, to determine the de-activation of the switch 23a and, when it is located in its second position, to determine the activation of the switch 23a.

In this way we obtain, respectively, the disconnection of the switch 23a from the electronic control unit 16 and its connection thereto.

By way of example, an electric circuit 24 may be provided that includes the switch 23a and the electronic control unit 16.

The electric circuit 24 can be open when the pedal lever 21a is in said first position and the switch 23a is consequently de-activated (fig. 2a), and therefore disconnected from the electronic control unit 16.

In the same way, the electric circuit 24 can be closed when the pedal lever 21 a is in said second position and the switch 23a is consequently activated (fig. 2b), and therefore connected to the electronic control unit 16.

There is a consequent correlation between type of surface to be cleaned and connection of the switch 23a to the electronic control unit 16.

In possible implementations, described by way of example with reference to fig. 2a, the regulator 17 can be configured to set, when the electric circuit 24 is open, that is, when the switch 23a is de-activated and disconnected from the electronic control unit 16 and the multifunction brush 18a is in its first functioning condition, a first maximum value of electric power P₁ supplied by the electric motor 13.

It can be provided that the first maximum value of electric power P₁ is, for example, equal to a nominal electric power value P_{N} supplied by the electric motor 13.

According to implementations described using fig. 2b, the regulator 17 can be configured to set, when the electric circuit 24 is closed, that is, when the switch 23a is activated and connected to the electronic control unit 16 and the multifunction brush 18a is in its second functioning condition, a second maximum value of electric power P₂ supplied by the electric motor 13.

It can be provided that the second maximum value of electric power P₂ is, for example, less than a nominal value of maximum electric power P_{N} supplied by the electric motor 13. For example, the second maximum value of electric power P₂ can be less than the first maximum value of electric power P₁.

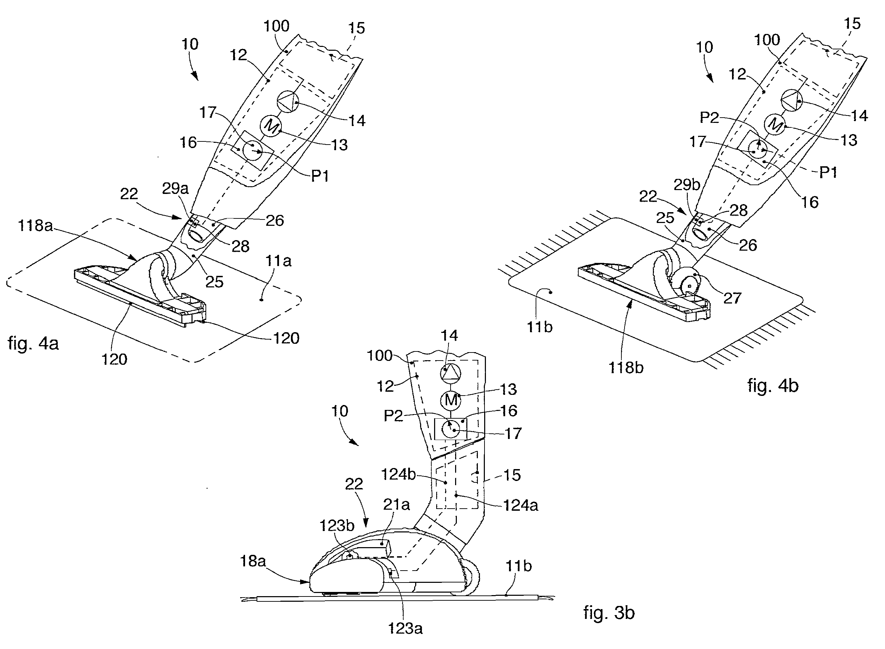

According to possible variant solutions, described using figs. 3a and 3b, the command device 22 can include the pedal lever 21 a and a pair of switches, for example a first switch 123a and a second switch 123b.

In possible implementations, for example described with reference to figs. 3a and 3b, the pedal lever 21a can function as a power selector 21 for both switches 123a, 123b, although this does not exclude the possibility of adopting only one pedal lever or any other type of power selector 21, dedicated for each switch 123a with 123b.

Dedicated electric circuits can also be provided, for example a first electric circuit 124a and a second electric circuit 124b, which include the electronic control unit 16 and respectively the first switch 123a and the second switch 123b.

It is clear that each electric circuit 124a, 124b is open when the corresponding switch 123a, 123b is de-activated, and is closed when the corresponding switch 123a, 123b is activated.

In these solutions, both the first switch 123a and the second switch 123b can be configured to be normally de-activated, that is, normally disconnected from the electronic control unit 16.

Fig. 3a can be used to describe possible implementations in which the first switch 123a can be activated and therefore connected to the electronic control unit 16, by positioning the pedal lever 21a in its first position.

This positioning, as we said before, is selectively carried out by a user depending on the type of surface to be cleaned.

Activating the first switch 123a, and therefore connecting it to the electronic control unit 16, corresponding to the multifunction brush 18a assuming its first condition of use, can have the function of conditioning the setting by the regulator 17 of the first maximum power value P₁.

With reference to fig. 3b, the positioning of the pedal lever 21a in its second position, due to the need to use the vacuum cleaner 10 to clean dust from the carpet 11b, can simultaneously cause the multifunction brush 18a to assume the second functioning condition, the first switch 123a to be de-activated and therefore disconnected, and the second switch 123b to be activated and hence connected to the electronic control unit 16.

In this way it is possible to simultaneously obtain the opening of the first electric circuit 124a and the closing of the second electric circuit 124b.

The electronic control unit 16 can be configured to set, by means of the regulator 17, the second maximum value of electric power P₂ supplied by the electric motor 13, when the second electric circuit 124b is closed.

The regulator 17 can therefore function as a power commutator from the first maximum value of electric power P₁ to the second maximum value of electric power P₂.

In possible forms of embodiment, it can be provided that, instead of including one or more switches 23a, 123a, 123b as command members 23, electrically connectable to the electronic control unit 16, the command device 22 is defined by a mechanical, or electromechanical drive mechanism. In other forms of embodiment, the one or more command members can be connected with a wireless connection to the electronic control unit 16, which can possibly be provided, for example associated with the regulator 17, with a receiver for activation signals arriving from the electronic commutator itself.

According to some forms of embodiment, described with the aid of figs. 4a and 4b, the vacuum cleaner 10 can include as terminal suction accessories 18, two specific-use brushes, in particular a brush for floors 118a, configured for use on hard floors 11 a (fig. 4a), and a brush for carpets 118b, configured for use on carpets 11b (fig. 4b).

The brush for floors 118a and the brush for carpets 118b are removable, and therefore mechanical connection means can be provided between the specific-use brushes 118a and 118b and the containing body 100.

The connection means can include for example a coupling tube 25 for the brush, defining the upper end of the specific-use brush 118a, 118b, and a coupling tube 26 for the vacuum cleaner, defining the lower end of the containing body 100, configured to be reciprocally connected.

Possible implementations can provide that the coupling tube 25 of the brush has a shape suitable to connect, through interference or jointing, with the coupling tube 26 of the vacuum cleaner, or mechanical attachment members can be provided, associated with the two coupling tubes 25, 26, for example springs, screws or rapid connection means, which obtain a removable type attachment between each of the specific-use brushes 118a, 118b and the containing body 100.

The brush for floors 118a can be provided with fixed bristles 120, while the brush for carpets 118b may not have them, and instead include wheels for running on the carpet 11b.

The passage of the vacuum cleaner 10 from its use for sucking in dust from the hard floor 11a (fig. 4a) to its use for sucking in dust from the carpet 11b (fig. 4b) requires replacing the brush for floors 118a with the brush for carpets 118b and vice versa.

Figs. 4a and 4b are used to describe forms of embodiment in which the command device 22 includes, as its command member 23, a recognition device 28 included in the coupling tube 26 of the vacuum cleaner and, as power selectors 21, a first identification element 29a and a second identification element 29b, associated to the coupling tube 25 respectively of the brush for floors 118a and the brush for carpets 118b.

The recognition device 28 can cooperate with the first identification element 29a and with the second identification element 29b to recognize which of the brushes - brush for floors 118a or brush for carpets 118b - is connected to the containing body 100.

The recognition device 28 can also be configured to send to the electronic control unit 16, after recognition, an electric or electronic signal relating to the specific brush for a specific use 118a, 118b connected.

In possible implementations, the recognition device 28 can be for example an electronic commutator, an electronic board, a printed circuit, a switch or a micro-switch, or other type of electric or electromechanical actuator, or again an optical or magnetic reader, or a transceiver device.

The first identification element 29a and the second identification element 29b can be defined by printed circuits with differentiated configuration, by electric connectors with different reciprocal conformation, by one- or two-dimensional identification codes such as for example bar codes or QR codes, or by radio-emitters, for example the RFID type.

In possible implementations it is provided that, when the brush for hard floors 118a is connected to the containing body 100, the first identification element 29a interacts with the recognition device 28, for example by physical or electronic connection. After this connection, the recognition device 28 is activated to identify the brush for hard floors 118a and to send to the electronic control unit 16 a signal relating to the presence of the brush for hard floors 118a.

The electronic control unit 16 can be configured to recognize the signal and, by means of the regulator device 17, set the first maximum value of electric power P₁.

In the same way, after the connection of the brush for carpets 118b, the second identification element 29b interacts with the recognition device 28, which is activated to recognize the presence of the brush for carpets 118b and to send to the electronic control unit 16 a signal relating to it.

The electronic control unit 16 can be configured to recognize the signal and, by means of the regulator device 17, set the second maximum value of electric power P₂.

In other forms of embodiment, not shown in the drawings, the recognition device 28 can be a micro-switch configured to be normally de-activated, while the identification elements 29a and 29b can be defined by a wall of the coupling tube 25 of the brush and a concavity made in the coupling tube 25 of the brush.

In this way, the connection of one or the other of the two specific-use brushes 118a, 118b to the containing body 100 can selectively determine the activation of the micro-switch, for example due to the effect of the contact with the wall, or can keep the micro-switch de-activated, for example by accommodating the latter inside the concavity as above.

## Claims

1. Vacuum cleaner comprising an electric motor (13) to drive the suction, an electronic control unit (16) to control the electric power supplied by said electric motor (13) and one or more terminal suction accessories (18) of different types and/or each having different functioning conditions, **characterized in that** it comprises a device (22) to command said electronic control unit (16), which is provided with at least one power selector (21) provided on a respective terminal suction accessory (18) and at least one command member (23) connected to said electronic control unit (16) and able to be selectively activated by said at least one power selector (21) in order to automatically set said electronic control unit (16) to at least a maximum value (P₁, P₂) of electric power supplied by said electric motor (13), depending on the type and/or functioning condition of said one or more terminal suction accessories (18).

2. Vacuum cleaner as in claim 1, wherein said one or more terminal suction accessories (18) comprise a multifunction brush (18a) comprising a containing body (19), a plurality of movable bristles (20), brush driving means (21a) selectively positionable in a first position and in a second position in order to make said multifunction brush (18a) respectively assume at least a first functioning condition in which the movable bristles (20) protrude from below said containing body (19) and a second functioning condition in which the movable bristles (20) are completely retracted inside the containing body (19), **characterized in that** said brush driving means (21a) define said power selector (21) and **in that** said command member (23) comprises at least a switch (23a, 123a) configured to be automatically driven by the brush driving means (21a) in said first position and to be automatically de-activated by the brush driving means (21 a) in said second position.

3. Vacuum cleaner as in claim 2, **characterized in that** said command member (23) comprises at least a switch (123b) configured to be automatically driven by the brush driving means (21a) in said second position and to be automatically de-activated by the brush driving means (21a) in said first position.

4. Vacuum cleaner as in claim 1, wherein said vacuum cleaner (10) is provided with a containing body (100) and wherein said terminal suction accessories (18) comprise specific-use brushes (118a, 118b), removable and selectively connectable to said containing body (100), **characterized in that** said command member (23) comprises a brush recognition member (28) associated to said containing body (100), and said power selector (21) comprises an identification element (29a, 29b) for each of said specific-use brushes (118a, 118b), said brush recognition member (28) being able to be automatically activated by each identification element (29a, 29b) to the connection of one or the other of said specific-use brushes (118a, 118b) in order to recognize the corresponding specific-use brush (118a, 118b) and send to said electronic control unit (16) a signal relating to said specific-use brush (118a, 118b).

5. Vacuum cleaner as in any claim from 1 to 4, **characterized in that** said at least one command member (23) is chosen from a group comprising electric, electronic, electromagnetic, mechanical, electromechanical switches (23a, 123a, 123b), electronic boards, printed circuits, optical readers or transceiver devices (28), drive mechanisms.

6. Vacuum cleaner as in any claim from 1 to 5, **characterized in that** said one or more command members (23) are connected to said control unit (16) by means of one or more respective electric circuits (24; 124a, 124b) and **in that** said electronic control unit (16) comprises a regulator (17) configured to set at least a maximum value (P₁, P₂) of said electric power depending on the opening and closing of said electric circuits (24; 124a, 124b).

7. Vacuum cleaner as in any claim from 1 to 5, **characterized in that** said one or more command members (23) are connected to said control unit (16) by means of a wireless connection for the transmission of activation signals and **in that** said electronic control unit (16) comprises a regulator (17) configured to receive said signals and to set at least a maximum value (P₁, P₂) of said electric power depending on said signals.

8. Method to suck up dust from a plurality of surfaces to be cleaned (11a, 11b) by means of one or more terminal suction accessories (18) of a vacuum cleaner (10), of different types and/or each having different functioning conditions, which provides to drive said vacuum cleaner (10) in suction by means of at least one electric motor (13), said method also providing to regulate an electric power supplied by said electric motor (13) by means of an electronic control unit (16), **characterized in that** it provides to automatically set at least one maximum value (P₁, P₂) of electric power supplied by said electric motor (13) depending on the type and/or functioning condition of said one or more terminal suction accessories (18), by the selective activation of a command member (23) of a command device (22) of said electronic control unit (16) by means of at least one power selector (21) provided on a respective terminal suction accessory (18).

9. Method as in claim 8, **characterized in that** it provides to automatically command the setting of said at least one maximum value (P₁) of electric power by the selective positioning of brush driving means (21 a) of a multifunction brush (18a) configured to make said multifunction brush (18a) assume a plurality of functioning conditions.

10. Method as in claim 8, **characterized in that** it provides to selectively connect one or the other of a plurality of specific-use brushes (118a, 118b) to a containing body (100) of said vacuum cleaner (10), wherein said connection determines the automatic activation of a command member (28), to recognize, by means of the command member (28), after said connection, a specific brush for a specific use (118a, 118b), and to command, on the basis of said recognition, the setting of said at least one maximum value (P₁, P₂) of electric power.

## Patentansprüche

1. Staubsauger, aufweisend einen Elektromotor (13) zum Antreiben der Absaugung, eine elektronische Steuereinrichtung (16) zum Steuern der von dem Elektromotor (13) zugeführten elektrischen Leistung, und ein oder mehrere Anschlusssaugzubehörteile (18) von unterschiedlichen Typen und/oder mit jeweils unterschiedlichen Funktionsbedingungen, **dadurch gekennzeichnet, dass** dieser eine Vorrichtung (22) zum Kommandieren der elektronischen Steuereinrichtung (16) aufweist, welche mit wenigstens einem Leistungswähler (21), der an einem entsprechenden Anschlusssaugzubehörteil (18) vorgesehen ist, und wenigstens einem Kommandoelement (23) versehen ist, das mit der elektronischen Steuereinrichtung (16) verbunden ist und geeignet ist, durch den wenigstens einen Leistungswähler (21) wahlweise aktiviert zu werden, um die elektronische Steuereinrichtung (16) in Abhängigkeit von dem Typ und/oder der Funktionsbedingung des einen oder der mehreren Anschlusssaugzubehörteile (18) automatisch auf wenigstens einen Maximalwert (P₁, P₂) der von dem Elektromotor (13) zugeführten elektrischen Leistung zu setzen.

2. Staubsauger nach Anspruch 1, wobei das eine oder die mehreren Anschlusssaugzubehörteile (18) eine Multifunktionsbürste (18a) aufweist, die einen Aufnahmekörper (19), eine Mehrzahl von bewegbaren Borsten (20) und Bürstenantriebsmittel (21a) aufweist, die wahlweise in einer ersten Position und in einer zweiten Position positionierbar sind, um zu bewerkstelligen, dass die Multifunktionsbürste (18a) wenigstens eine erste Funktionsbedingung, bei welcher die bewegbaren Borsten (20) von dem Aufnahmekörper (19) nach unten vorstehen, bzw. eine zweite Funktionsbedingung übernimmt, bei welcher die bewegbaren Borsten (20) vollständig in den Aufnahmekörper (19) zurückgezogen sind, **dadurch gekennzeichnet, dass** die Bürstenantriebsmittel (21 a) den Leistungswähler (21) definieren, und dass das Kommandoelement (23) wenigstens einen Schalter (23a, 123a) aufweist, der konfiguriert ist, um von den Bürstenantriebsmitteln (21 a) automatisch in der ersten Position angetrieben zu werden und von den Bürstenantriebsmitteln (21a) automatisch in der zweiten Position deaktiviert zu werden.

3. Staubsauger nach Anspruch 2, **dadurch gekennzeichnet, dass** das Kommandoelement (23) wenigstens einen Schalter (123b) aufweist, der konfiguriert ist, um von den Bürstenantriebsmitteln (21a) automatisch in der zweiten Position angetrieben zu werden und von den Bürstenantriebsmitteln (21 a) automatisch in der ersten Position deaktiviert zu werden.

4. Staubsauger nach Anspruch 1, wobei der Staubsauger (10) mit einem Aufnahmekörper (100) versehen ist, und wobei die Anschlusssaugzubehörteile (18) Spezialgebrauchsbürsten (118a, 118b) aufweisen, die lösbar und mit dem Aufnahmekörper (100) wahlweise verbindbar sind, **dadurch gekennzeichnet, dass** das Kommandoelement (23) ein Bürstenerkennungselement (28) aufweist, das mit dem Aufnahmekörper (100) verbunden ist, und der Leistungswähler (21) ein Identifikationselement (29a, 29b) für jede der Spezialgebrauchsbürsten (118a, 118b) aufweist, wobei das Bürstenerkennungselement (28) geeignet ist, von jedem Identifikationselement (29a, 29b) für die Verbindung von einer oder der anderen der Spezialgebrauchsbürsten (118a, 118b) automatisch aktiviert zu werden, um die entsprechende Spezialgebrauchsbürste (118a, 118b) zu erkennen und ein auf die Spezialgebrauchsbürste (118a, 118b) bezogenes Signal an die elektronische Steuereinrichtung (16) zu senden.

5. Staubsauger nach irgendeinem Anspruch von 1 bis 4, **dadurch gekennzeichnet, dass** das wenigstens eine Kommandoelement (23) aus einer Gruppe ausgewählt ist, die elektrische, elektronische, elektromagnetische, mechanische, elektromechanische Schalter (23a, 123a, 123b), elektronische Platten, gedruckte Schaltungen, optische Leser oder Sendeempfängergeräte (28), Antriebsmechanismen aufweist.

6. Staubsauger nach irgendeinem Anspruch von 1 bis 5, **dadurch gekennzeichnet, dass** das eine oder die mehreren Kommandoelemente (23) über einen oder mehrere entsprechende elektrische Schaltkreise (24; 124a, 124b) mit der Steuereinrichtung (16) verbunden sind, und dass die elektronische Steuereinrichtung (16) einen Regler (17) aufweist, der konfiguriert ist, um wenigstens einen Maximalwert (P₁, P₂) der elektrischen Leistung in Abhängigkeit von dem Öffnen und Schließen der elektrischen Schaltkreise (24; 124a, 124b) zu setzen.

7. Staubsauger nach irgendeinem Anspruch von 1 bis 5, **dadurch gekennzeichnet, dass** das eine oder die mehreren Kommandoelemente (23) über eine drahtlose Verbindung für die Übertragung von Aktivierungssignalen mit der Steuereinrichtung (16) verbunden sind, und dass die elektronische Steuereinrichtung (16) einen Regler (17) aufweist, der konfiguriert ist, um die Signale zu empfangen und wenigstens einen Maximalwert (P₁, P₂) der elektrischen Leistung in Abhängigkeit von den Signalen zu setzen.

8. Verfahren zum Aufsaugen von Staub von einer Mehrzahl von zu säubernden Flächen (11 a, 11b) mittels eines oder mehreren Anschlusssaugzubehörteilen (18) von unterschiedlichen Typen und/oder mit jeweils unterschiedlichen Funktionsbedingungen eines Staubsaugers (10), welches dafür sorgt, den Staubsauger (10) beim Saugen mittels wenigstens eines Elektromotors (13) anzutreiben, wobei das Verfahren auch dafür sorgt, eine von dem Elektromotor (13) zugeführte elektrische Leistung mittels einer elektronischen Steuereinrichtung (16) zu regeln, **dadurch gekennzeichnet, dass** dieses dafür sorgt, wenigstens einen Maximalwert (P₁, P₂) der von dem Elektromotor (13) zugeführten elektrischen Leistung in Abhängigkeit von dem Typ und/oder der Funktionsbedingung des einen oder der mehreren Anschlusssaugzubehörteile (18) durch die wahlweise Aktivierung eines Kommandoelements (23) einer Kommandovorrichtung (22) der elektronischen Steuereinrichtung (16) mittels wenigstens eines an einem entsprechenden Anschlusssaugzubehörteil (18) vorgesehenen Leistungswählers (21) automatisch zu setzen.

9. Verfahren nach Anspruch 8, **dadurch gekennzeichnet, dass** dieses dafür sorgt, das Setzen des wenigstens einen Maximalwertes (P₁) der elektrischen Leistung durch das wahlweise Positionieren von Bürstenantriebsmitteln (21a) einer Multifunktionsbürste (18a), die konfiguriert sind, um zu bewerkstelligen, dass die Multifunktionsbürste (18a) eine Mehrzahl von Funktionsbedingungen übernimmt, automatisch zu kommandieren.

10. Verfahren nach Anspruch 8, **dadurch gekennzeichnet, dass** dieses dafür sorgt, eine oder die andere von einer Mehrzahl von Spezialgebrauchsbürsten (118a, 118b) mit einem Aufnahmekörper (100) des Staubsaugers (10) wahlweise zu verbinden, wobei die Verbindung die automatische Aktivierung eines Kommandoelements (28) bestimmt, um nach der Verbindung mittels des Kommandoelements (28) eine Spezialbürste für einen Spezialgebrauch (118a, 118b) zu erkennen und auf der Basis der Erkennung das Setzen des wenigstens einen Maximalwertes (P₁, P₂) der elektrischen Leistung zu kommandieren.

## Revendications

1. Aspirateur comportant un moteur électrique (13) pour actionner l'aspiration, une unité électronique de contrôle (16) pour contrôler la puissance électrique fournie par ledit moteur électrique (13) et un un ou plusieurs accessoires terminaux d'aspiration (18) de types différents et/ou ayant chacun des conditions de fonctionnement différentes, **caractérisé en ce qu'**il comprend un dispositif (22) de commande de ladite unité électronique de contrôle (16), pourvue d'au moins un sélecteur de puissance (21), prévu sur un accessoire terminal d'aspiration (18) respectif, et au moins un élément de commande (23) relié à ladite unité électronique de contrôle (16) et pouvant être actionné sélectivement par ledit au moins un sélecteur de puissance (21) pour régler automatiquement ladite unité électronique de contrôle (16) sur une valeur (P1, P2) de puissance électronique fournie par ledit moteur électrique (13), en fonction du type et/ou des conditions de fonctionnement desdits un ou plusieurs accessoires terminaux d'aspiration (18).

2. Aspirateur selon la revendication 1, dans lequel lesdits un ou plusieurs accessoires terminaux d'aspiration (18) comprennent une brosse multifonction (18a) comprenant un corps de logement (19), une pluralité de poils mobiles (20), des moyens d'activation (21a) de la brosse, pouvant être positionnés sélectivement dans une première position et dans une seconde position pour faire assumer à ladite brosse multifonction (18a) respectivement au moins une première condition de fonctionnement dans laquelle les poils mobiles (20) font saillie en dessous dudit corps de logement (19) et une seconde condition de fonctionnement dans laquelle les poils mobiles (20) sont complètement rétractes à l'intérieur du corps de logement (19), **caractérisé en ce que** lesdits moyens d'entraînement (21a) de la brosse définissent ledit sélecteur de puissance (21) et dans lequel ledit élément de commande (23) comprend au moins un interrupteur (23a, 123a) configuré pour être activé automatiquement par les moyens d'activation (21a) de la brosse dans ladite première position et pour être déactivé automatiquement par les moyens d'activation (21a) de la brosse dans ladite seconde position.

3. Aspirateur selon la revendication 2, **caractérisé en ce que** ledit élément de commande (23) comprend au moins un interrupteur (123b) configuré pour être activé automatiquement par les moyens d'activation (21a) de la brosse dans ladite seconde position et pour être déactivé par les moyens d'activation (21a) de la brosse dans ladite première position.

4. Aspirateur selon la revendication 1, dans lequel ledit aspirateur (10) est pourvu d'un corps de logement (100) et dans lequel lesdits accessoires terminaux d'aspiration (18) comprennent des brosses à usage spécifique (118a, 118b) amovibles pouvant être reliées sélectivement audit corps de logement (100), **caractérisé en ce que** ledit organe de commande (23) comprend un organe de reconnaissance de brosse (28) associé audit corps de logement (100), et ledit sélecteur de puissance (21) comprend un élément d'identification (29a, 29b) pour chacune desdites brosses à usage spécifique (118a, 118b), ledit organe de reconnaissance de brosse (28) pouvant être activé automatiquement par chaque élément d'identification (29a, 29b) suite à la liaison de l'une ou l'autre desdites brosses à usage spécifique (118a, 118b), pour reconnaître la brosse à usage spécifique (118a, 118b) correspondante et envoyer à ladite unité électronique de contrôle (16) un signal relatif à ladite brosse à usage spécifique (118a, 118b).

5. Aspirateur selon n'importe laquelle des revendications 1 à 4, **caractérisé en ce que** ledit au moins un organe de commande (23) est choisi dans un groupe comprenant les interrupteurs électriques, électroniques, électromagnétiques, mécaniques, électromécaniques (23a, 123a, 123b), les cartes électroniques, les circuits imprimés, les lecteurs optiques ou les dispositifs émetteurs-récepteurs (28), les mécanismes d'entraînement.

6. Aspirateur selon n'importe laquelle des revendications 1 à 5, **caractérisé en ce que** lesdits un ou plusieurs organes de commande (23) sont connectés à ladite unité de contrôle (16) au moyen d'un ou plusieurs circuits électriques (24; 124a, 124b) respectifs, et **en ce que** ladite unité électronique de contrôle (16) comprend un régulateur (17) configuré pour régler au moins une valeur maximale (P1, P2) de ladite puissance électrique en fonction de l'ouverture et de la fermeture desdits circuits électriques (24; 124a, 124b).

7. Aspirateur selon n'importe laquelle des revendications 1 à 5, **caractérisé en ce que** lesdits un ou plusieurs organes de commande (23) sont connectés à ladite unité de contrôle (16) au moyen d'une connexion sans fil pour la transmission de signaux d'activation et **en ce que** ladite unité électronique de contrôle (16) comprend un régulateur (17) configuré pour recevoir lesdits signaux et régler au moins une valeur maximale (P1, P2) de ladite puissance électrique en fonction desdits signaux.

8. Procédé pour aspirer de la poussière sur une pluralité de surfaces à nettoyer (11a, 11b), au moyen d'un ou plusieurs accessoires terminaux d'aspiration (18) d'un aspirateur (10), de types différents et/ou ayant chacun des conditions de fonctionnement différentes, comportant l'actionnement de l'aspiration dudit aspirateur (10) par au moins un moteur électrique (13), ledit procédé comportant également le contrôle d'une puissance électrique fournie par ledit moteur électrique (13) au moyen d'une unité électronique de contrôle (16), **caractérisé en ce qu'**il comporte le réglage automatique d'au moins une valeur maximale (P1, P2) de puissance électrique fournie par ledit moteur électrique (13) en fonction du type et/ou des conditions de fonctionnement desdits un ou plusieurs accessoires terminaux d'aspiration (18), par l'activation sélective d'un organe de commande (23) d'un dispositif de commande (22) de ladite unité électronique de contrôle (16) au moyen d'au moins un sélecteur de puissance (21) prévu sur un accessoire terminal d'aspiration (18) respectif.

9. Procédé selon la revendication 8, **caractérisé en ce qu'**il comporte la commande automatique du réglage de ladite au moins une valeur maximale (P1) de puissance électrique par le positionnement sélectif de moyens d'activation de brosse (21a) d'une brosse multifonction (18a) configurée pour faire assumer à ladite brosse multifonction (18a) une pluralité de conditions de fonctionnement.

10. Procédé selon la revendication 8, **caractérisé en ce qu'**il comporte la liaison sélective de l'une ou de l'autre d'une pluralité de brosses à usage spécifique (118a, 118b) à un corps de logement (100) dudit aspirateur (10), dans lequel ladite liaison détermine l'activation automatique d'un organe de commande (28), pour reconnaître, au moyen de l'organe de commande (28), après ladite liaison, une brosse spécifique pour un usage spécifique (118a, 118b) et pour commander, sur la base de ladite reconnaissance, le réglage de ladite au moins une valeur maximale (P1, P2) de puissance électrique.
